# EUROPÄISCHE PATENTSCHRIFT

(11) **EP 3 519 270 B1**
(45) Veröffentlichungstag und Bekanntmachung des Hinweises auf die Patenterteilung: **30.06.2021**
(21) Anmeldenummer: 17768689.6
(22) Anmeldetag: 30.08.2017
(51) Int. Cl.: B61D 17/04

(54) **SCHIENENFAHRZEUG**
RAIL VEHICLE
VÉHICULE FERROVIAIRE

(30) Priorität: 29.09.2016 DE 102016218882
(43) Veröffentlichungstag der Anmeldung: 07.08.2019
(73) Patentinhaber: Siemens Mobility GmbH, 81739 München (DE)
(72) Erfinder: KRICKAU, Andreas, 91088 Bubenreuth (DE)
(86) Internationale Anmeldenummer: PCT/EP2017/071743
(87) Internationale Veröffentlichungsnummer: WO 2018/059865

(56) Entgegenhaltungen:
- EP-A1- 0 736 436
- EP-A1- 2 871 108
- EP-A2- 0 990 572
- EP-A2- 1 232 924
- WO-A1-2016/001056
- DE-A1- 10 118 220
- DE-A1-102013 205 617

## Beschreibung

Die Erfindung betrifft ein Schienenfahrzeug.

Schienenfahrzeuge umfassen einen Rohbaukasten und eine Verkleidung, die infrastrukturelle Elemente des Schienenfahrzeugs verdeckt und/oder integriert umfasst. Beispielsweise umfasst die Verkleidung eine Isolierung. Der Rohbaukasten kann in integraler Bauweise oder in Differentialbauweise ausgeführt sein. Bei integraler Bauweise ist der Rohbaukasten von außen lediglich lackiert. Ein Rohbaukasten in Differentialbauweise wird üblicher Weise von außen mittels einer Beplankung, beispielsweise mit Blechen und/oder Glasfaser verstärkten Kunststoffprofilen, witterungsbeständig abgeschlossen.

Nachträglich werden Komponenten des sogenannten Innenausbaus im Fahrzeug montiert, die die verschiedenen Funktionen: Isolation, Leitungsführung, Luftführung, Verkleidung, etc. entweder als integrierte Baugruppen oder als separate Komponenten übernehmen. Bestimmte Funktionen wie Isolation, Luftführung, Leitungsführung werden durch den Innenausbau übernommen, also von innen in den Rohbau eingebracht. Dies bedingt eine durchgehende, zusätzliche Verkleidung der eingebrachten Funktionsteile und damit des Fahrzeugs von innen (differentialer Innenausbau) oder eine entsprechend hochwertige Oberfläche der eingebrachten integralen Funktionsbaugruppen auf der Innenseite (integraler Innenausbau). Der Innenausbau bietet einen gewissen Schutz des Rohbaukastens von innen.

Aus der EP 0 990 572 A2 ist ein Wagenkasten mit einem Wagenkastengerippe bekannt, bei dem für eine einfache Montage und effektive Raumausnutzung im Bereich der Seitenwandstruktur je Kastengerippefeld ein Teilseitenwandelement eingesetzt wird, das in den Raum zwischen zugehörigen Spanten greift.

Aus der DE 101 18 220 A1 ist ein Wagenkasten mit Teilseitenwandelementen bekannt, die mit Ausstattungselementen bestückt sind.

Aus der EP 2 871 108 A1 ist eine Verbindungsanordnung zur einfachen Befestigung eines Verkleidungsteils eines Fahrzeugs, insbesondere Schienenfahrzeugs bekannt.

Der Rohbaukasten und/oder seine Beplankung sind nach Stand der Technik von außen ungeschützt und daher anfällig für Beschädigungen, beispielsweise durch Unfälle.

Die Aufgabe besteht darin, den Innenraum des Rohbaukastens leicht umgestalten zu können.

Erfindungsgemäß wird ein Schienenfahrzeug nach Anspruch 1 zur Verfügung gestellt.

Das Schienenfahrzeug umfasst einen Rohbaukasten, fahrzeugbezogene Funktionselemente und eine am Rohbaukasten befestigte Verkleidung, die zumindest einen Teil der fahrzeugbezogenen Funktionselemente des Schienenfahrzeugs verdeckt und/oder integriert umfasst, wobei die Verkleidung eine Außenverkleidung des Rohbaukastens ist, und wobei das Schienenfahrzeug Sitze und/oder Haltestangen im Innern des Rohbaukastens umfasst, die direkt am Rohbaukasten befestigt sind.
Dadurch können fahrgastbezogene Funktionselemente, wie Sitzbänke, Sitze, Haltestangen und andere Komponenten leicht ein- und ausgebaut werden.

Dadurch wird der Innenraum sehr leicht umgestaltbar.

Das Schienenfahrzeug hat weiterhin den Vorteil, dass der Rohbaukasten besser geschützt ist, da die Verkleidung von außen am Rohbaukasten befestigt ist, wobei die Verkleidung eine strapazierfähige und/oder schlagfeste Außenoberfläche umfasst.

Gleichzeitig sind die fahrzeugbezogenen Funktionselemente für Wartung, Reparatur und Ersatz von außen und damit leichter zugänglich.

In einer bevorzugten Ausführungsform ist die Außenoberfläche aus Aluminium und/oder Kunststoff geformt.

Dies sind günstige Materialen für schlagfeste Außenoberflächen.

Die Verkleidung kann als Kern eine durchgehende Isolation des Rohbaukastens umfassen.

Dadurch können Kältebrücken vermieden und der Wärmedurchgangskoeffizient verbessert werden.

Die fahrzeugbezogenen Funktionselemente können Luftkanäle, elektrische, pneumatische und/oder hydraulische Leitungen umfassen.

Damit sind diese für den Betrieb des Schienenfahrzeugs besonders wichtigen fahrzeugbezogenen Funktionselemente leicht zugänglich.

Insbesondere kann das Schienenfahrzeug so ausgebildet sein, dass ein Innenraum des Rohbaukastens keine fahrzeugbezogenen Funktionselemente umfasst.

Dadurch wird der Innenraum noch leichter umgestaltbar.

Die Verkleidung kann eine Innenoberfläche mit mindestens einer Möglichkeit zur Befestigung der Verkleidung am Rohbaukasten umfassen.

Damit ist die Verkleidung leicht am Rohbaukasten zu befestigen.

Der Rohbaukasten kann in integraler Bauweise ausgeführt sein und von innen lediglich eine Lackschicht und/oder eine Polyvinylchloridbeschichtung umfassen.

Dies ist eine Möglichkeit für einen Rohbaukasten und dessen Innengestaltung.

Alternativ kann der Rohbaukasten in Differentialbauweise ausgeführt sein und von innen mit einer Beplankung abgeschlossen sein.

Dies ist eine andere Möglichkeit für einen Rohbaukasten und dessen Innengestaltung.

In einer bevorzugten Ausführungsform umfasst die Verkleidung eine durchgehende Isolation des Rohbaukastens.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigt:

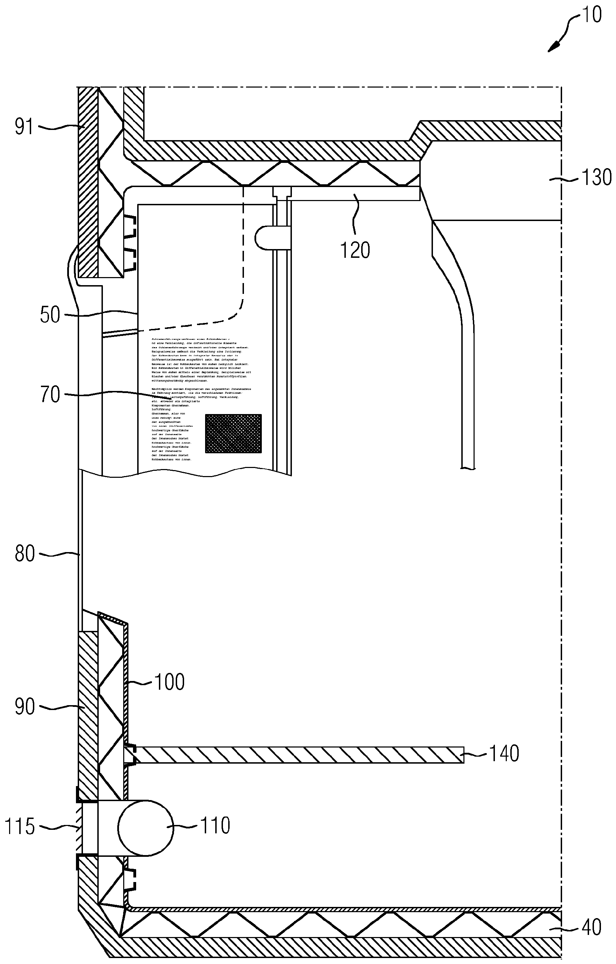

- Figur 1: einen Ausschnitt eines Schnitts senkrecht zu einer Querachse durch ein Schienenfahrzeug gemäß einer beispielhaften Ausführungsform der vorliegenden Erfindung.

In der Figur 1 ist ein Ausschnitt eines Schnitts senkrecht zu einer Querachse durch ein Schienenfahrzeug 10 gemäß einer beispielhaften Ausführungsform der vorliegenden Erfindung gezeigt.

Das Schienenfahrzeug 10 umfasst einen integralen Rohbaukasten 40, der von außen mit einer Außenverkleidung 90 verkleidet ist. In die Außenverkleidung 90 ist im Ausführungsbeispiel eine durchgehende Isolation des Rohbaukastens 40 des Schienenfahrzeugs 10 integriert, die keine Kältebrücken aufweist und einen guten Wärmedurchgangskoeffizienten bewirkt.

Zusätzlich oder alternativ kann beziehungsweise können Luftkanäle, elektrische, pneumatische und/oder hydraulische Leitungen in die Außenverkleidung 90 integriert sein. Die Leitungen sind dadurch für Montage, Wartung, Reparatur und/oder Ersatz von außen leicht zugänglich.

Insbesondere sind in einem Ausführungsbeispiel alle fahrzeugbezogenen Funktionselemente des Schienenfahrzeugs in die Außenverkleidung integriert. Der Innenraum des Rohbaukastens ist dann frei allein durch fahrgastbezogene Funktionselemente gestaltbar. Sitzbänke, Haltestangen und andere Komponenten können leicht ein- und ausgebaut werden.

Die Außenverkleidung 90 umschließt den Rohbaukasten 40 vollständig oder zumindest im Wesentlichen vollständig. Die Außenverkleidung 90 erfüllt im Ausführungsbeispiel neben dem Verkleiden des Rohbaukastens mindestens eine weitere Funktionalität, sie ist fakultativ multifunktional. Die Außenverkleidung 90 ist im dargestellten Beispiel weiterhin ein Profil. In einem anderen Ausführungsbeispiel der Erfindung ist die Außenverkleidung 90 hingegen ein Sandwich.

Die Außenverkleidung 90 ist rohbaukastenseitig mit einer Innenoberfläche mit Befestigungselementen zur Befestigung am Rohbaukasten 40 versehen. Beispielhafte Befestigungselemente umfassen Klebeflächen, Klettflächen und Anschraubflächen.

Eine dem Rohbaukasten abgewandte Außenoberfläche 91 der Außenverkleidung 90 wird im Ausführungsbeispiel durch eine strapazierfähige und/oder schlagfeste Außenoberfläche gebildet. Im Beispiel wird die Außenoberfläche 91 durch mindestens ein Aluminiumelement gebildet. Alternativ oder zusätzlich kann zumindest ein Teil der Außenoberfläche 91 durch mindestens ein Kunststoffelement gebildet werden. Andere Materialien mit strapazierfähiger und/oder schlagfester Außenoberfläche können ebenfalls verwendet werden.

Rohbaukasten 40 und Außenverkleidung 90 weisen eine Fensteröffnung 80 und ein Frischluftöffnung 115 auf. Über die Frischluftöffnung 115 ist einer im Inneren des Rohbaukastens 40 angeordneten Heizvorrichtung 110 Frischluft zuführbar. Die Heizvorrichtung 110 ist unter einer Sitz- oder Ablagebank 140 angeordnet.

Ein bis zu einem unteren Rand der Fensteröffnung 80 reichender unterer, innerer Teil des Rohbaukastens 40 ist im Ausführungsbeispiel mit einer aufgespritzten PVC-Beschichtung 100 (PVC steht für Polyvinylchlorid) verkleidet. Die PVC-Beschichtung 100 bildet so den Fußboden des Innenraums des Schienenfahrzeugs 10. Ein am unteren Rand der Fensteröffnung 80 beginnender oberer, innerer Teil des Rohbaukastens 40 ist mit einer Lackschicht versehen. In anderen Ausführungsbeispielen ist der Rohbaukasten von innen vollständig lackiert beziehungsweise vollständig mit PVC beschichtet.

In ein Dachelement des Rohbaukastens 40 ist im Ausführungsbeispiel ein Luftkanal 130 integriert.

Anstelle eines integralen Rohbaukastens mit aufgespritzter PVC-Beschichtung und/oder Lackierung kann auch ein mit großflächigen Elementen innenverkleideter Differentialrohbaukasten Teil der vorliegenden Erfindung sein. Die Verkleidung kann dann großflächig und preisgünstig sein.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schienenfahrzeug (10) umfassend:
- einen Rohbaukasten (40) und
- eine am Rohbaukasten (40) befestigte Verkleidung (90), die fahrzeugbezogene Funktionselemente des Schienenfahrzeugs (10) verdeckt und/oder integriert umfasst, wobei die Verkleidung (90) eine Außenverkleidung des Rohbaukastens (40) ist,
**dadurch gekennzeichnet, dass**
das Schienenfahrzeug (10) Sitze und/oder Haltestangen im Innern des Rohbaukastens (40) umfasst, die direkt am Rohbaukasten befestigt sind.

2. Schienenfahrzeug nach Anspruch 1,
wobei die Verkleidung (90) eine strapazierfähige und/oder schlagfeste Außenoberfläche (91) umfasst.

3. Schienenfahrzeug nach Anspruch 2,
wobei die schlagfeste Außenoberfläche Aluminium und/oder Kunststoff umfasst.

4. Schienenfahrzeug nach einem der vorangehenden Ansprüche,
wobei die Verkleidung (90) als Kern eine durchgehende Isolation des Rohbaukastens (40) umfasst.

5. Schienenfahrzeug nach einem der vorangehenden Ansprüche,
wobei die Verkleidung (90) eine Innenoberfläche mit mindestens einer Möglichkeit zur Befestigung der Verkleidung am Rohbaukasten (40) umfasst.

6. Schienenfahrzeug nach einem der vorangehenden Ansprüche,
wobei die fahrzeugbezogenen Funktionselemente Luftkanäle (130), elektrische, pneumatische und/oder hydraulische Leitungen umfassen.

7. Schienenfahrzeug nach einem der vorangehenden Ansprüche,
wobei ein Innenraum des Rohbaukastens (40) keine fahrzeugbezogenen Funktionselemente umfasst.

8. Schienenfahrzeug nach einem der vorangehenden Ansprüche,
wobei der Rohbaukasten (40) in integraler Bauweise ausgeführt ist und von innen lediglich eine Lackschicht und/oder eine Polyvinylchloridbeschichtung (100) umfasst.

9. Schienenfahrzeug nach einem der vorangehenden Ansprüche,
wobei der Rohbaukasten (40) in Differentialbauweise ausgeführt ist und von innen mit einer Beplankung abgeschlossen ist.

## Claims

1. Rail vehicle (10) comprising:
- a body shell (40) and
- a cladding (90) fastened to the body shell (40), which comprises vehicle-related functional elements of the rail vehicle (10) in a covered and/or integrated fashion, wherein the cladding (90) is an external cladding of the body shell (40),
**characterised in that**
the rail vehicle (10) comprises seats and/or handrails in the interior of the body shell (40), which are fastened directly to the body shell.

2. Rail vehicle according to claim 1,
wherein the cladding (90) comprises a hard-wearing and/or shock-resistant external surface (91).

3. Rail vehicle according to claim 2,
wherein the shock-resistant external surface comprises aluminium and/or plastic.

4. Rail vehicle according to one of the preceding claims,
wherein the cladding (90) comprises a continuous insulation of the body shell (4) as a core.

5. Rail vehicle according to one of the preceding claims,
wherein the cladding (90) comprises an inner surface with at least one possibility of fastening the cladding to the body shell (40).

6. Rail vehicle according to one of the preceding claims,
wherein the vehicle-related functional elements comprise air ducts (130), electric, pneumatic and/or hydraulic lines.

7. Rail vehicle according to one of the preceding claims,
wherein an interior of the body shell (40) comprises no vehicle-related functional elements.

8. Rail vehicle according to one of the preceding claims,
wherein the body shell (40) is embodied in an integral design and comprises only a lacquer coat and/or a polyvinylchloride coating (100) from the inside.

9. Rail vehicle according to one of the preceding claims,
wherein the body shell (40) is embodied in a differential design and is closed from the inside with a panelling.

## Revendications

1. Véhicule (10) ferroviaire comprenant :
- un chaudron (40) et
- un panneautage (90), qui est fixé au chaudron (40) et qui comprend à recouvrement et/ou en intégration les éléments fonctionnels, rapportés à un véhicule, du véhicule (10) ferroviaire, le panneautage (90) étant un panneautage extérieur du chaudron (40),
**caractérisé en ce que**
le véhicule (10) ferroviaire comprend des sièges et/ou des barres de retenue à l'intérieur du chaudron (40), qui sont fixés directement au chaudron.

2. Véhicule ferroviaire suivant la revendication 1,
dans lequel le panneautage (90) comprend une surface (91) extérieure résistant à l'usure et/ou résistant aux chocs.

3. Véhicule ferroviaire suivant la revendication 2,
dans lequel la surface extérieure résistant aux chocs comprend de l'aluminium et/ou de la matière plastique.

4. Véhicule ferroviaire suivant l'une des revendications précédentes,
dans lequel le panneautage (90) comprend comme âme une isolation continue du chaudron (40).

5. Véhicule ferroviaire suivant l'une des revendications précédentes,
dans lequel le panneautage (90) comprend une surface intérieure ayant au moins une possibilité de fixation du panneautage au chaudron (40).

6. Véhicule ferroviaire suivant l'une des revendications précédentes,
dans lequel les éléments fonctionnels, rapportés à un véhicule, comprennent des conduits (130) pour de l'air, des lignes électriques pneumatiques et/ou hydrauliques.

7. Véhicule ferroviaire suivant l'une des revendications précédentes,
dans lequel l'intérieur du chaudron (40) ne comprend pas d'élément fonctionnel, rapporté à un véhicule.

8. Véhicule ferroviaire suivant l'une des revendications précédentes,
dans lequel le chaudron (40) est réalisé en mode de construction intégral et comprend de l'intérieur seulement une couche de vernis et/ou un revêtement (100) de polychlorure de vinyle.

9. Véhicule ferroviaire suivant l'une des revendications précédentes,
dans lequel le chaudron (40) est réalisé en mode de construction différentiel et est fermé de l'intérieur par un bordage.
